Europäisches Patentamt

European Patent Office

Office européen des brevets

(11) Publication number: **0 495 117 A1**

# EUROPEAN PATENT APPLICATION
## published in accordance with Art. 158(3) EPC

(21) Application number: **91913125.0**

(22) Date of filing: **30.07.91**

(86) International application number:
**PCT/JP91/01015**

(87) International publication number:
**WO 92/02767 (20.02.92 92/05)**

(51) Int. Cl.5: **F24F 11/02**

(30) Priority: **30.07.90 JP 199027/90**

(43) Date of publication of application:
**22.07.92 Bulletin 92/30**

(84) Designated Contracting States:
**DE DK FR GB**

(71) Applicant: **YAMATAKE-HONEYWELL CO. LTD.**
**12-19 Shibuya 2 Chome Shibuya-Ku**
**Tokyo 150(JP)**

(72) Inventor: **KON, Akihiko**
**28-16, Momohamacho**
**Hiratsuka-shi, Kanagawa 254(JP)**

(74) Representative: **Kahler, Kurt, Dipl.-Ing. et al**
**Patentanwälte Kahler, Käck & Fiener,**
**Gerberstrasse 3, Postfach 12 49**
**W-8948 Mindelheim(DE)**

(54) **METHOD OF COMPUTING EQUIVALENT TEMPERATURE AND INSTRUMENT FOR ENVIRONMENT MEASUREMENT.**

(57) A method of computing an appropriate equivalent temperature using an estimated mean temperature sensation computing device to compute estimated mean temperature sensation PMV indicating the degree of comfort in the room environment, and further to an environment measurement instrument, in which size reduction of the instrument is promoted by reducing influence of air current and derivation of an exact equivalent temperature $T_{eq}$ is intended. An outer surface of a module (5-11) is kept at a fixed temperature $T_{cr}$. An outer surface of another module (5-12) lower in radiant rate than the module (5-11) is kept at a fixed temperature $T_{cr}$. Electric power requirements H1 and H2 for maintaining said fixed temperature $T_{cr}$ of the modules (5-11), (5-12) per unit area hit by the air current are measured and, with the use of a fixed constant $\alpha$, computation such as H1 $- \alpha$.H2 is performed, whereby a computation result is outputted as a measured value (H1 $- \alpha$.H2) for computing an equivalent temperature $T_{eq}$ by the following equation (a).

$$T_{eq} = b_1.T_{cr} + b_2.T_a - b_4.(H1 - \alpha.H2) \qquad (a)$$

FIG.1A

FIG.1B

## 1. Technical Field

The present invention relates to a method of calculating an equivalent temperature and an environment measuring apparatus, which can be suitably applied to a predicted mean thermal sensitivity calculating apparatus for calculating a PMV (Predicted Mean Vote) value as predicted mean thermal sensitivity representing the degree of comfort in an indoor environment.

## 2. Background Art

In a conventional apparatus, as a formula for calculating a PMV value as predicted mean thermal sensitivity, the PMV equation defined by ISO (International Standard Organization) 7730, i.e., the following equation (1), has been employed:

$PMV = (0.303e^{-0.036M} + 0.028) \times [(M - W') - 3.05 \times 10^{-3} \cdot \{5733 - 6.99(M - W') - Pa\} - 0.42\{(M - W') - 58.15\} - 1.7 \times 10^{-5} \cdot M \cdot (5867 - Pa) - 0.0014 \cdot M \cdot (34 - Ta) - 3.96 \cdot 10^{-8} \cdot fc\ell \cdot \{(Tc\ell + 274)^4 - (Tr + 273)^4\} - fc\ell \cdot hc \cdot (Tc\ell - Ta)]$  (1)

for

$Tc\ell = Tsk - 0.155 \cdot Ic\ell \cdot [3.96 \times 10^{-8} \cdot fc\ell \cdot \{(Tc\ell + 274)^4 - (Tr + 273)^4\} + fc\ell \cdot hc \cdot (Tc\ell - Ta)]$

$$hc = \begin{cases} 2.38(Tc\ell - Ta)^{0.25} \\ \qquad for\ 2.38(Tc\ell - Ta)^{0.25} > 12.1\sqrt{Vair} \\ 12.1\sqrt{Vair} \\ \qquad for\ 2.38(Tc\ell - Ta)^{0.25} \leq 12.1Vair \end{cases}$$

Tc$\ell$ = clothing surface temperature
Tsk = skin temperature
Pa = RH$\cdot$Pa*
RH = humidity
Pa* = saturated water vapor pressure
M = activity amount
W' = work amount
Ta = air temperature
Tr = radiant temperature
Ic$\ell$ = clothing thermal resistance
Vair = air velocity
fc$\ell$ = factor

Such a conventional PMV equation, however, is a collection of large number of terms, and has a very complicated formation, e.g., biquadractic terms of Tc$\ell$ and Tr and repetitive calculations of Tc$\ell$.

For this reason, in the conventional method, complicated arithmetic processing is required, and hence the processing time is undesirably prolonged. Moreover, the cost of the PMV calculating apparatus is inevitably increased, thus posing some practical difficulties in the use of such a PMV calculating apparatus as a PMV sensor for building air-conditioning.

Under the circumstances, the present applicant has proposed the following method obtained by trial and error. An equivalent temperature Teq is calculated first on the basis of a radiant temperature Tr, an air temperature Ta, an air velocity Vair, a predetermined factor Tcr, coefficients $b_1$ to $b_3$, and a coefficient n, according to the following equation (2). Subsequently, a predicted mean thermal sensitivity PMV* $\overline{is}$ calculated on the basis of the equivalent temperature Teq obtained by this calculation, the air temperature Ta, a relative humidity RH, a saturated water vapor pressure Pa* , a clothing thermal resistance Ic$\ell$, and coefficients $a_1$ to $a_6$, according to the following equation (3),

$Teq = b_1 \cdot Tr + b_2 \cdot Ta - b_3 \cdot Vair^n \cdot (Tcr - Ta)$  (2)

3

$$PMV^* = a_1, + a_2 \cdot Ta + a_3 \cdot RH \cdot Pa^* - [a_4/(1 + a_5 \cdot Ic\ell)] \cdot (a_6 - Teq) \qquad (3)$$

According to this PMV* equation, the predicted mean thermal sensitivity PMV* can be calculated by four simple arithmetic operations without degrading the accuracy, thus greatly shortening the processing time as compared with the conventional apparatus. In addition, since only four simple arithmetic operations are required, a calculating section can be constituted by simply incorporating an analog circuit mainly consisting of an operational amplifier or only one microcomputer. This promotes a reduction in cost of the apparatus and hence greatly contributes to a practical application of the apparatus as a PMV sensor for building air-conditioning.

3. Disclosure of Invention

[Problem to be Solved by the Invention]

According to the above-described PMV* equation, however, in order to obtain the equivalent temperature Teq, the radiant temperature Tr, the air velocity Vair, and the like need to be independently measured.

For this reason, the present applicant has introduced an environment measuring apparatus to calculate the equivalent temperature Teq without using the radiant temperature Tr and the air velocity Vair, thereby omitting independent measurements of the radiant temperature, the air velocity Vair, and the like and simplifying arithmetic processing for the equivalent temperature Teq.

However, the following problem is posed in the environment measuring apparatus introduced for the first time by the present applicant. As the apparatus is reduced in size, the influence of air currents on the apparatus is increased. As a result, an accurate equivalent temperature Teq cannot be obtained.

[Means for Solving the Problem]

The present invention has been proposed to solve such a problem. The first invention (according to claim 1) relates to with a method of calculating an equivalent temperature, comprising first holding means for holding an outer surface temperature of a first sensor object at a constant temperature Tcr, second holding means for holding an outer surface temperature of a second sensor object at a constant temperature Tcr, the second sensor object having an emissivity lower than that of the first sensor object, first power consumption value measuring means for measuring a power consumption value H1, required to hold the outer surface temperature of the first sensor object at the constant temperature Tcr, per unit surface area against which an air current strikes, and second power consumption value measuring means for measuring a power consumption value H2, required to hold the outer surface temperature of the second sensor object at the constant temperature Tcr, per unit surface area against which no air current strikes, wherein an equivalent temperature Teq is calculated on the basis of an air temperature Ta, coefficients $b_1$, $b_2$, and $b_4$, and a predetermined factor $\alpha$, according to the following equation (a),

$$Teq = b_1 \cdot Tcr + b_2 \cdot Ta - b_4 (H1 - \alpha \cdot H2) \qquad (a)$$

The second invention (according to claim 2) relates to an environment measuring apparatus comprising the first holding means, the second holding means, the first power consumption value measuring means, and second power consumption value measuring means of the first invention, and output means for performing a calculation of $H1 - \alpha \cdot H2$ by using a predetermined factor $\alpha$ on the basis of the power consumption value H1 measured by the first power consumption value measuring means and the power consumption value H2 measured by the second power consumption value measuring means, and outputting the calculation result as a measurement value $H1 - \alpha \cdot H2$.

The third invention (according to claim 3) relates to a method of calculating an equivalent temperature, comprising holding means for holding an outer surface temperature of a sensor object at a constant temperature Tcr, a cover mounted on part of an outer surface of the sensor object to shield an air current, power consumption value measuring means for measuring a power consumption value $W_3$ required to hold the outer surface temperature of the sensor object at the constant temperature Tcr, and output means for multiplying the power consumption value $W_3$, measured by the power consumption value measuring means, by $[SA/(SA + SB)] \cdot (1/a)$ where a is a surface area, of the sensor object, against which an air current strikes, and SA/SB is a ratio (SA : SB) of a surface area, of the sensor object, against which an air current strikes, to a surface area thereof against which no air current strikes, and outputting the product as a

4

measurement value H3, wherein an equivalent temperature Teq is calculated on the basis of an air temperature Ta, coefficients $b_1$, $b_2$, and $b_4$, and a predetermined factor $\alpha$, according to the following equation (b),

$$Teq = b_1 \cdot Tcr + b_2 \cdot Ta - b_4 \cdot (H1 - \alpha \cdot H2) \qquad (a)$$

The fourth invention (according to clam 4) relates to an environment measuring apparatus comprising the holding means, the cover, the power consumption value measuring means, and the output means of the third invention.

[Effect]

According to the second invention, therefore, the influence of air currents can be reduced by calculating the difference between the power consumption values H1 and H2. According to the fourth invention, the influence of the air currents can be reduced by mounting the cover on part of the outer surface of the sensor object. In addition, according to the first and third inventions, an equivalent temperature Teq can be calculated while the influence of air currents is kept reduced. That is, according to the present invention, a reduction in size of the environment measuring apparatus can be promoted, and an accurate equivalent temperature Teq can be obtained, thereby greatly contributing to the realization of a predicted mean thermal sensitivity calculating apparatus.

4. Brief Description of Drawings

Fig. 1(a) is a schematic view showing an environment measuring apparatus according to an embodiment of the present invention (second invention);
Fig. 1(b) is a schematic view showing an environment measuring apparatus according to another embodiment of the present invention (fourth invention);
Fig. 2 is a block diagram showing a predicted mean thermal sensitivity calculation apparatus to which the environment measuring apparatus is applied;
Fig. 3 is a block diagram showing a predicted mean thermal sensitivity calculating apparatus using the environment measuring apparatus;
Fig. 4 is a longitudinal sectional view showing the internal arrangement of a sensor module in the environment measuring apparatus shown in Fig. 1(a);
Fig. 5 is a view showing the process of calculating predicted mean thermal sensitivity PMV* in the predicted mean thermal sensitivity calculating apparatus shown in Fig. 3;
Fig. 6 is a view showing modifications of a module main body of the environment measuring apparatus shown in Fig. 1(a);
Fig. 7 is a view showing combinations of sensor modules as modifications in the environment measuring apparatus shown in Fig. 1(a); and
Fig. 8 is a view showing modifications of a module main body of the environment measuring apparatus shown in Fig. 1(b).

Best Mode of Carrying Out the Invention

An environment measuring apparatus according to the present invention will be described below in detail.

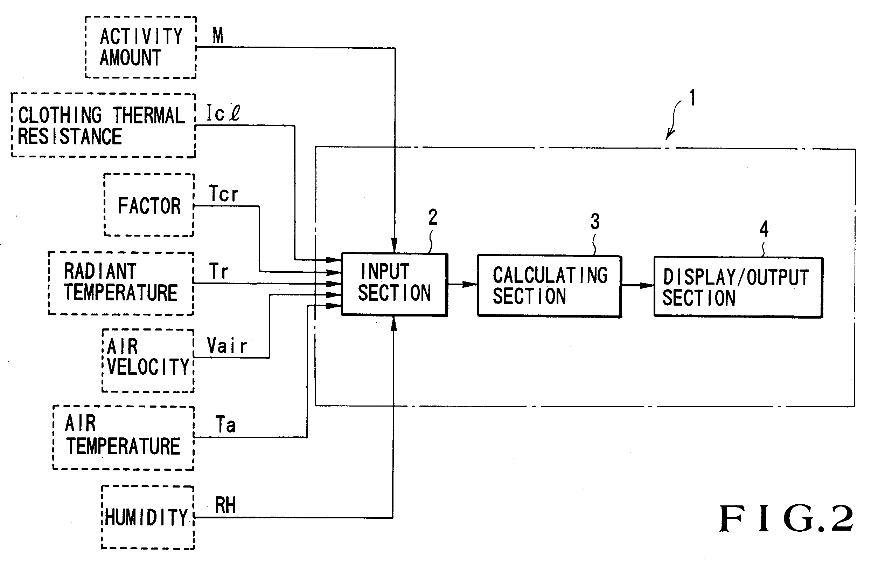

Fig. 2 is a block diagram showing a predicted mean thermal sensitivity calculating apparatus to which the environment measuring apparatus according to the present invention is applied.

A predicted mean thermal sensitivity calculating apparatus 1 comprises an input section 2, a calculating section 3, and a display/output section 4. An activity amount M, a clothing thermal resistance Icℓ, and a predetermined factor Tcr are supplied, as set values, to the input section 2. In addition, a radiant temperature Tr, an air velocity Vair, an air temperature Ta, and a relative humidity RH are supplied, as detection values, to the input section 2. These set and detection values are supplied from the input section 2 to the calculating section 3. Subsequently, the calculating section 3 performs arithmetic processing as a characteristic feature of the present invention on the basis of a PMV* equation using an equivalent temperature Teq.

More specifically, the equivalent temperature is calculated first by the above-mentioned equation (2) on the basis of the radiant temperature Tr, the air temperature Ta, the air velocity Vair, the predetermined

factor Tcr, coefficients $b_1$ to $b_3$, and a coefficient n. Predicted mean thermal sensitivity PMV* is calculated by the above-mentioned equation (3) on the basis of the calculated equivalent temperature Teq, the air temperature Ta, a relative humidity RH, a saturated water vapor pressure Pa*, the clothing thermal resistance Icl, and coefficients $a_1$ to $a_6$.

Equation (3) including equation (2) is obtained by the present applicant by trial and error to simplify the conventional PMV equation (equation (1)). The PMV* value obtained by this equation coincides with the PMV value obtained by the conventional PMV equation with considerably high accuracy. Table 1 shows the comparison between PMV and PMV* in the presence of air in a summertime under the following conditions: Icl = 0.5, RH = 50%, Ta = Tr = 30°C, and Vair = 0.2 m/s. Table 2 shows the comparison between PMV and PMV* in the presence of air in a summertime under the following conditions: Icl = 0.5, RH = 50%, Ta = Tr = 30°C, and Vair = 0.4 m/s. It is apparent from these tables that PMV and PMV* coincide with each other with only a small error.

Table 1

| Data associated with PMV | | Data associated with PMV* | |
|---|---|---|---|
| PMV | 1.4977 | PMV* | 1.4767 |
| LOAD | 28.3663 | LOAD* | 28.3992 |
| R + C | 22.0470 | R* + C* | 22.6971 |

Table 2

| Data associated with PMV | | Data associated with PMV* | |
|---|---|---|---|
| PMV | 1.3671 | PMV* | 1.2551 |
| LOAD | 25.8998 | LOAD* | 24.1467 |
| R + C | 24.5231 | R* + C* | 26.9492 |

In Tables 1 and 2, "LOAD" indicates a collective portion in equation (1) expressed as PMV = $(0.303e^{-0.036M} + 0.028)$ x LOAD, and "LOAD*" corresponds to "LOAD" for PMV*. In addition, in R + C = $3.96 \cdot 10^{-8} \cdot fcl \cdot \{(Tcl + 274)^4 - (Tr + 273)^4\} - fcl \cdot hc \cdot (Tcl - Ta)$, "R* + C*" corresponds to "R + C" for PMV*. "R* + C*" is proportional to $[a_4/(1 + a_5 \cdot Icl)] \cdot (a_6 - Teq)$.

The PMV* value obtained by the calculating section 3 is supplied to the display/output section 4 to be displayed.

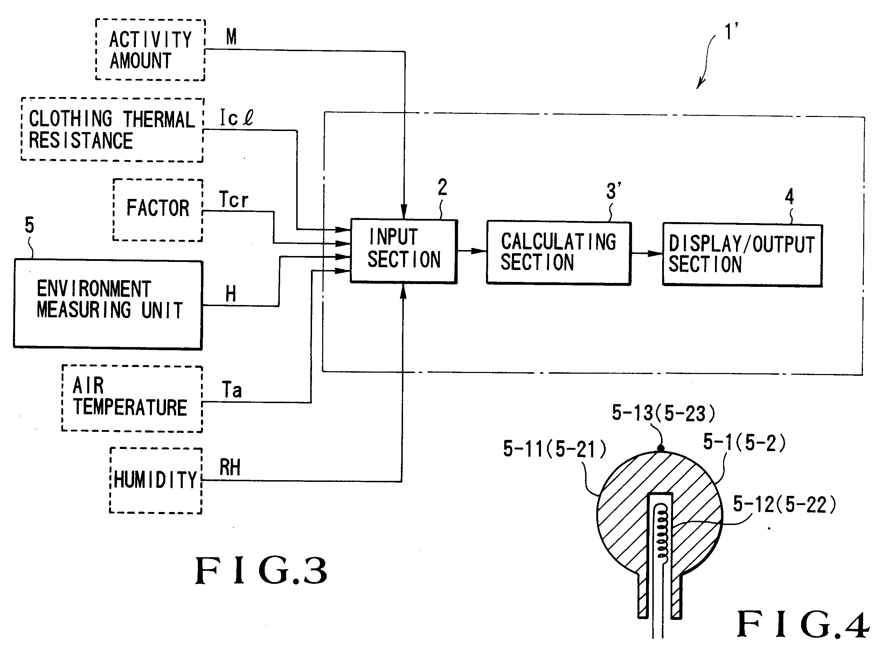

Fig. 3 is a block diagram showing a predicted mean thermal sensitivity calculating apparatus using the environment measuring apparatus according to the present invention. In this case, similar to the case shown in Fig. 2, an activity amount M, a clothing thermal resistance Icl, a predetermined factor Tcr, an air temperature Ta, and a relative humidity RH are supplied to an input section 2. However, an environment measuring apparatus 5 is arranged indoors to provide a measurement value H (W/m²) in place of a radiant temperature Tr and an air velocity Vair.

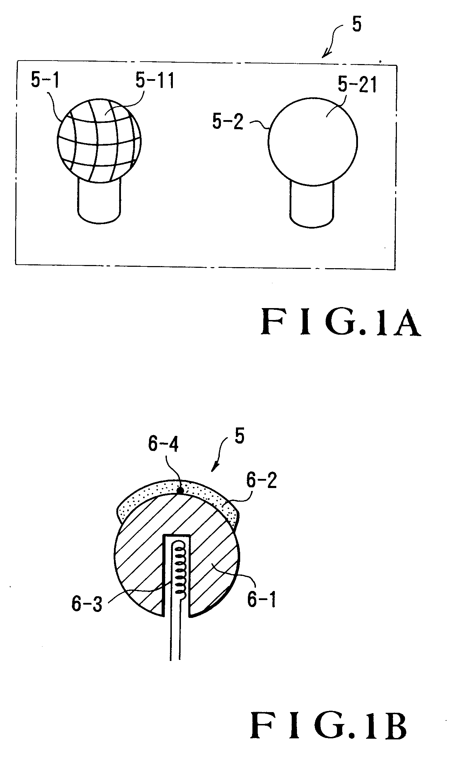

Fig. 1(a) shows an embodiment of the environment measuring apparatus 5, which is constituted by a first sensor module 5-1 having a spherical module main body 5-11, and a second sensor module 5-2 having a spherical module main body 5-21. The module main bodies 5-11 and 5-21 consist of a metal having high thermal conductivity (copper or aluminum). The module main body 5-11 has a black or gray dull outer surface, whereas the module main body 5-21 has a mirror surface (plated with silver or chromium) as an outer surface. That is, the emissivity of the outer surface of the module main body 5-11 is set to be larger than that of the module main body 5-21. For example, the module main body 5-11 has an emissivity of 0.3 or more; and the module main body 5-11, an emissivity of 0.2 or less. As shown in Fig. 4, the sensor modules 5-1 and 5-2 respectively have heaters 5-12 and 5-22 arranged in the module main bodies 5-11 and 5-21, and temperature-sensitive elements 5-13 and 5-23 arranged on the outer surfaces thereof. In addition, the sensor modules 5-1 and 5-2 respectively include control circuits (not shown) for controlling the amounts of power to be supplied to the heaters 5-12 and 5-22 so as to keep the detection temperatures of the temperature-sensitive elements 5-13 and 5-23, i.e., the outer surface temperatures of the module main bodies 5-11 and 5-21 at a constant temperature Tcr°C. Furthermore, the sensor modules 5-1 and 5-2 respectively have detecting circuits (not shown) for detecting the power consumption values of the heaters 5-12 and 5-22. Power consumption values $W_1$ and $W_2$ detected by these detecting circuits are respectively divided by surface areas a ($m^2$), of the module main bodies 5-11 and 5-12, against which air currents strike, to obtain power consumption values H1 and H2 ($W/m^2$) per unit area against which an air current strike, and a calculation of H1 - $\alpha^\bullet$H2 (where $\alpha$ is a factor) is performed. The calculation result is then supplied, as a measurement value H ($W/m^2$), to the input section 2. Note that in this embodiment, thermal interference between the module main bodies 5-11 and 5-21 is minimized.

In a predicted mean thermal sensitivity calculating apparatus 1', to which the measurement value H obtained by the environment measuring apparatus 5 is input, a calculating section 3' calculates an equivalent temperature Teq on the basis of the air temperature Ta, the predetermined factor (constant temperature) Tcr, coefficients $b_1$, $b_2$, and $b_4$, and the measurement value H, i.e., (H1 - $\alpha^\bullet$H2), according to the following equation (4):

$$Teq = b_1{}^\bullet Tcr + b_2{}^\bullet Ta - b_4{}^\bullet(H1 - \alpha^\bullet H2) \qquad (4)$$

Subsequently, predicted mean thermal sensitivity PMV* is calculated on the basis of the equivalent temperature Teq obtained in this manner, the air temperature Ta, the relative humidity RH, a saturated water vapor pressure Pa*, the thermal clothing resistance Icℓ, and coefficients $a_1$ to $a_6$, according to equation (3).

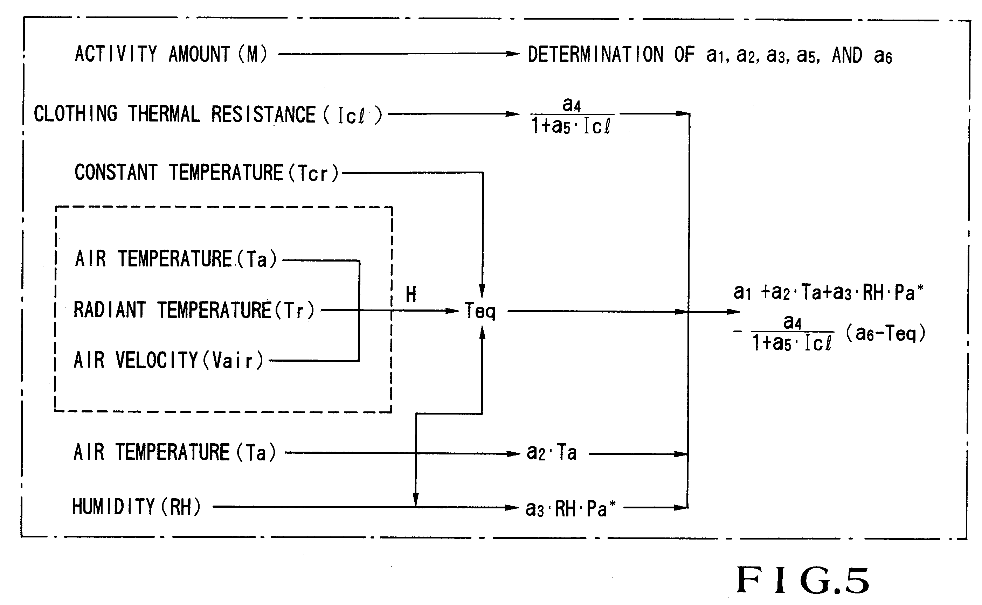

Fig. 5 shows the process of calculating the predicted mean thermal sensitivity PMV* in the predicted mean thermal sensitivity calculating apparatus 1'.

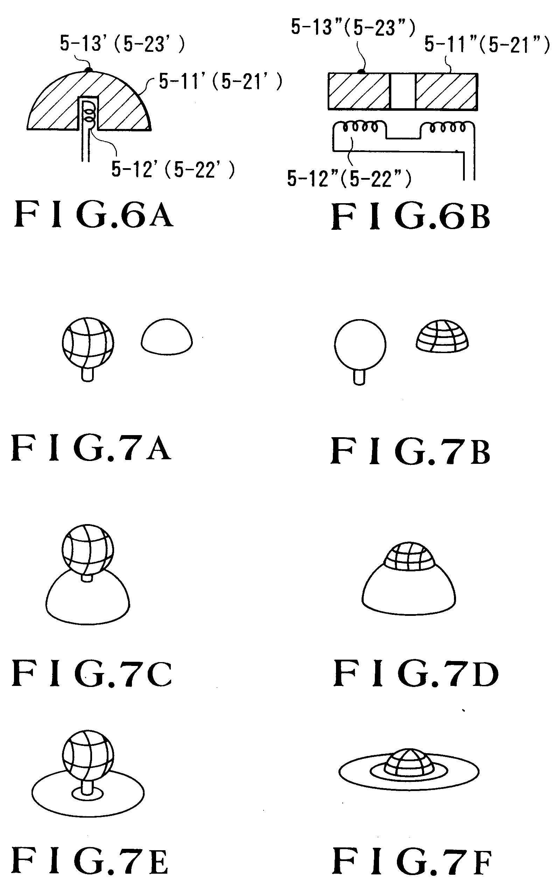

In the above description, the sensor modules 5-1 and 5-2 respectively include the spherical module main bodies 5-11 and 5-12. As shown in Fig. 6(a), however, hemispherical module main bodies 5-11' and 5-21' may be employed. As shown in Fig. 6(b), doughnut-like main bodies 5-11" and 5-21" may be employed. Alternatively, as shown in Figs. 7(a) to 7(f), spherical, hemispherical, and doughnut-like module main bodies may be selectively combined. Fig. 7(a) shows a case wherein spherical and hemispherical module main bodies are combined, and the spherical module main body has a larger emissivity. Fig. 7(b) shows a case wherein spherical and hemispherical module main bodies are combined, and the hemispherical module main body has a larger emissivity. Fig. 7(c) shows a case wherein spherical module main body is arranged on a hemispherical module main body, and the spherical module main body has a larger emissivity. Fig. 7(d) shows a case wherein a smaller one of hemispherical module main bodies is arranged on the other, and the smaller module main body has a larger emissivity. Fig. 7(e) shows a case wherein a spherical module main body is arranged above the hollow portion of a doughnut-like module main body, and the spherical module main body has a larger emissivity. Fig. 7(f) shows a case wherein a hemispherical module main body is arranged in the hollow portion of a doughnut-like module main body, and the hemispherical module main body has a larger emissivity.

According to the above description, the environment measuring apparatus 5 is constituted by the two separate components, i.e., the sensor modules 5-1 and 5-2. However, the unit 5 may be constituted by one sensor module. For example, as shown in Fig. 1(b), a spherical module main body 6-1 is composed of a metal material having high thermal conductivity (copper or aluminum). The emissivity of the outer surface of the module main body 6-1 is set to be 0.3 or more (by forming a black or gray dull outer surface), and a cover 6-2 consisting of a light-transmitting member (e.g., polyethylene) for transmitting light having a non-zero finite wavelength of 0.7 $\mu$m or more is mounted on part of the outer surface of the module main body 6-1 to shield an air current. A heater 6-3 is arranged in the module main body 6-1. In addition, a temperature-sensitive element 6-4 is arranged on the outer surface of the module main body 6-1. A control circuit (not shown) for controlling the amount of power to be supplied to the heater 6-3 is arranged to detect a power consumption value $W_3$, of the heater 6-3 so as to keep the detection temperature (outer surface temperature) of the temperature-sensitive element 6-4 at the constant temperature Tcr°C. This power consumption value $W_3$ is multiplied by [SA/(SA + SB)]$^\bullet$(1/a), and H3 = [SA/(SA + SB)]$^\bullet$($W_3$/a) is calculated. The calculation result is then supplied, as the measurement value H ($W/m^2$) of the environment measuring apparatus 5, to the input section 2. Note that in the above description, reference symbol a denotes a surface area ($m^2$), of the module main body 6-1, against which an air current strikes; and SA/SB, the ratio (SA : SB) of a surface area, of the module main body 6-1, against which an air current strikes, to a surface area thereof against which no air current strikes (a surface area covered by the cover 6-2).

In this case, in the predicted mean thermal sensitivity calculating apparatus 1', the equivalent temperature Teq is calculated by the calculating section 3' on the basis of the air temperature Ta, the constant temperature Tcr, the coefficients $b_1$, $b_2$, and $b_4$, and the measurement value H, i.e., H3, according to the following equation (5):

$$Teq = b_1 \cdot Tcr + b_2 \cdot Ta - b_4 \cdot H3 \qquad (5)$$

Subsequently, the predicted mean thermal sensitivity PMV* is calculated on the basis of the equivalent temperature Teq obtained in this manner, the air temperature Ta, the relative humidity RH, the saturated water vapor pressure Pa*, the clothing thermal resistance Icℓ, and the coefficients $a_1$, to $a_6$, according to equation (3).

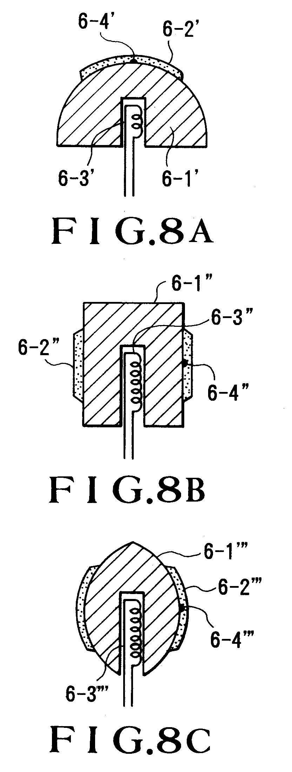

In the above description, the spherical module main body 6-1 is used. However, a hemispherical module main body 6-1' shown in Fig. 8(a), a columnar module main body 6-1'' shown in Fig. 8(b), or an elliptic module main body 6-1''' shown in Fig. 8(c) may be employed. If the columnar or elliptic module main body 6-1'' or 6-1''' is to be employed, a cover (6-2'' or 6-2''') is wound around the module main body.

The relationship between the measurement value H of the environment measuring apparatus 5 and equation (2), i.e., $Teq = b_1 \cdot Tr + b_2 \cdot Ta - b_3 \cdot Vair^n \cdot (Tcr - Ta)$, will be described next.

In the environment measuring apparatus 5 shown in Fig. 1(a), the measurement value H is represented by $(H1 - \alpha \cdot H2)$. In the environment measuring apparatus 5 shown in Fig. 1(b), the measurement value H is represented by H3. In the environment measuring apparatus 5, although the surface temperature of the module main body is kept at the constant temperature Tcr by controlling the power consumption value of the heater, this thermal energy is dissipated by environmental conditions, i.e., radiation, an air temperature, and an air current. In this case, heat dissipation by radiation is expressed by $hr \cdot (Tcr - Tr)$ where that hr is a radiant temperature transfer coefficient; and heat dissipation by the air temperature Ta and the air velocity Vair, by $m \cdot Vair^n \cdot (Tcr - Ta)$.

Therefore, the following equation can be established:

$$H = hr \cdot (Tcr - Tr) + m \cdot Vair^n \cdot (Tcr - Ta)(W/m^2)$$

This equation can be rewritten as:

$$hr \cdot Tcr - H = hr \cdot Tr - m \cdot Vair^n \cdot (Tcr - Ta)$$

Hence, the information of the right-hand side can be obtained by the measurement value H and a given factor $hr \cdot Tcr$. In this case, if the values of the coefficients of the respective terms of the two sides are determined by adding temperature sensor information to the measurement value H, the following equation can be obtained:

$$b_1 \cdot Tcr + b_2 \cdot Ta - b_4 \cdot H = b_1 \cdot Tr + b_2 \cdot Ta - b_3 \cdot Vair^n \cdot (Tcr - Ta)$$

That is, an equivalent temperature is obtained by using a given factor $b_1 \cdot Tcr$, the air temperature Ta, the measurement value H, and the coefficient $b_4$, according to the following equation:

$$Teq = b_1 \cdot Tcr + b_2 \cdot Ta - b_4 \cdot H$$

The reason why the environment measuring apparatuses 5 represented by Figs. 1(a) and 1(b) can reduce the influence of air currents will be described below.

The environment measuring apparatuses 5 represented by Figs. 1(a) and 1(b) are designed to collectively measure the air temperature Ta, the radiant temperature Tr, and the air velocity Vair. A model of these apparatuses is a human body itself.

A heated object such as a human body is deprived of thermal energy from its surface by radiation, an air temperature, and an air current. Heat dissipation by radiation can be expressed by the difference (Tsk - Tr) between the skin temperature Tsk and the radiant temperature Tr. If a radiation heat transfer coefficient hr ($W/m^2 \cdot k$) representing an efficiency at which heat is dissipated by radiation is introduced, the quantity of heat actually dissipated by radiation is represented as follows;

$$hr \cdot (Tsk - Tr) \ (W/m^2)$$

Subsequent heat dissipation by an air current having a temperature (Ta) is expressed by the difference (Tsk - Ta) between the skin temperature Tsk and the air temperature Ta and a convection heat transfer

EP 0 495 117 A1

coefficient hc $(W/m^2 \cdot k)$ representing an efficiency at which heat is dissipated by an air current as follows:

$$hc \cdot (Tsk - Ta) \ (W/m^2)$$

In this case, the coefficient hc is actually a function of the air velocity Vair and is represented by hc = $m \cdot Vair^n$ (n = 0.4 to 0.7).

As described above, the relationship between thermal energy H' $(W/m^2)$ by heating and heat dissipation by radiation, an air temperature, and an air current can be expressed by the following equation:

$$H' = hr \cdot (Tsk - Tr) + hc \cdot (Tsk - Ta)$$
$$= hr \cdot (Tsk - Tr) + m \cdot Vair^n \cdot (Tsk - Ta) \quad ...(6)$$

The coefficient $m$ of the second term of equation (6) is a function of the surface area of a heated object, and the value of the coefficient $m$ is increased with a decrease in size of an object (a decrease in surface area).

Figs. 1(a) and 1(b) respectively show practical measures to reduce the coefficient m while the size of a heated object is kept small. More specifically, the environment measuring apparatus 5 represented by Fig. 1(a) calculates a difference in thermal energy, whereas the environment measuring apparatus represented by Fig. 1(b) uses an air current shielding cover.

The environment measuring apparatus 5 represented by Fig. 1(a) will be described first. If no thermal interference is present between the sensor modules 5-1 and 5-2, and each module has the surface temperature Tcr $(°C)$, the following equations can be established in relation to the sensor modules 5-1 and 5-2:

$$H1 = hr_1 \cdot (Tcr - Tr) + m_1 \cdot Vair^n \cdot (Tcr - Ta) \ (W/m^2)$$
$$H2 = hr_2 \cdot (Tcr - Tr) + m_2 \cdot Vair^n \cdot (Tcr - Ta) \ (W/m^2)$$

If $H1 - \alpha \cdot H2$ is calculated,

$$H1 - \alpha \cdot H2 = hr_1 \cdot (1 - \alpha \cdot hr_2/hr_1) \cdot (Tcr - Tr) + (m_1 - \alpha \cdot m_2) \cdot Vair^n \cdot (Tcr - Ta)$$

That the module main body 5-2 has the mirror surface means that $hr_1 >> hr_2$, i.e., $hr_2/hr_1 << 1$. Therefore,

$$H1 - \alpha \cdot H2 \simeq hr_1 \cdot (Tcr - Tr) + (m_1 - \alpha \cdot m_2) \cdot Vair^n \cdot (Tcr - Ta)$$

In the air current effect (the second term of the right-hand side) of this formula, the coefficients are subtracted from each other $(m_1 - \alpha m_2)$. If, therefore, the value of $\alpha$ is arbitrarily selected, the $(m_1 - \alpha m_2)$ can be set to be small.

That is, even if the coefficients $m_1$ and $m_2$ are increased with a decrease in size of the apparatus, $(m_1 - \alpha \cdot m_2)$ can be reduced to a value similar to the coefficient $m$ for a human body by such subtraction processing.

The environment measuring apparatus 5 represented by Fig. 1(b) will be described next. In the module main body 6-1, the following equations for heat can be established in relation to a portion A against which a current air strikes and a portion B against which no current air strikes because of the cover 6-2:

$$HA = hr_A \cdot (Tcr - Tr) + m_A \cdot Vair^n \cdot (Tcr - Ta) \ (W/m^2)$$
$$HB = hr_B \cdot (Tcr - Tr) + m_B \cdot Vair^n \cdot (Tcr - Ta) \ (W/m^2)$$

Thermal energy $W_3$ (W) actually consumed by the heater 6-3 is given by

9

$$W_3 = a \cdot HA + (SB/SA) \cdot a \cdot HB$$

$$= [a \cdot hr_A + (SB/SA) \cdot a \cdot hr_B] \cdot (Tcr - Tr) + [a \cdot m_A$$

$$+ (SB/SA) \cdot a \cdot m_B] \cdot Vair^n \cdot (Tcr - Ta)$$

In this case, since the cover 6-2 is mounted, the coefficient $m_B$ is represented by $m_A \gg m_B$, i.e., $m_B/m_A \ll 1$, and

$$[a \cdot m_A + (SB/SA) \cdot a \cdot m_B] = a \cdot m_A \cdot [1 + (SB/SA) \cdot (m_B/m_A)] \approx a \cdot m_A$$

That the cover 6-2 exhibits transmission characteristics in an infrared region substantially means $hr_A \simeq hr_B$, and hence

$$[a \cdot hr_A + (SB/SA) \cdot a \cdot hr_B] = [1 + (SB/SA)] \cdot a \cdot hr_A$$

$$= [(SA + SB)/SA] \cdot a \cdot hr_A$$

Then,

$$W_3 = [a \cdot hr_A + (SB/SA) \cdot a \cdot hr_B] \cdot (Tcr - Tr) + [a \cdot m_A + (SB/SA) \cdot a \cdot m_B] \cdot Vair^n \cdot (Tcr - Ta) \simeq [(SA + SB)/SA] \cdot a \cdot hr_A \cdot (Tcr - Tr) + a \cdot m_A Vair^n \cdot (Tcr - Ta)$$

If both the sides of this equation are multiplied by $[SA/(SA + SB)] \cdot (1/a)$, then the following equation can be obtained:

$$[SA/(SA + SB)] \cdot (W_3/a) = hr_A \cdot (Tcr - Tr) + [SA/(SA + SB)] \cdot m_A Vair^n \cdot (Tcr - Ta)$$

In the air current effect (the second term of the right-hand side) of this equation, it is apparent that the coefficient given by $[SA/(SA + SB)] \cdot mA$ is reduced from the original coefficient $m_A$ by $SA/(SA + SB)$.

That is, by properly selecting the ratio (SA : SB) of an area against which an air current strikes to an area against which no air current strikes, $[SA/(SA + SB)] \cdot m_A$ can be reduced to a value substantially equal to the coefficient $\underline{m}$ for a human body, even if the value of $m_A$ is increased with a decrease in size of the apparatus.

## Claims

1. A method of calculating an equivalent temperature, characterized by comprising first holding means for holding an outer surface temperature of a first sensor object at a constant temperature Tcr, second holding means for holding an outer surface temperature of a second sensor object at a constant temperature Tcr, said second sensor object having an emissivity lower than that of said first sensor object, first power consumption value measuring means for measuring a power consumption value H1, required to hold the outer surface temperature of said first sensor object at the constant temperature Tcr, per unit surface area against which an air current strikes, and second power consumption value measuring means for measuring a power consumption value H2, required to hold the outer surface temperature of said second sensor object at the constant temperature Tcr, per unit surface area against which no air current strikes,

   wherein an equivalent temperature Teq is calculated on the basis of an air temperature Ta, coefficients $b_1$, $b_2$, and $b_4$, and a predetermined factor $\alpha$, according to the following equation (a),

   $$Teq = b_1 \cdot Tcr + b_2 \cdot Ta - b_4 (H1 - \alpha \cdot H2) \qquad (a)$$

2. An environment measuring apparatus characterized by comprising first holding means for holding an outer surface temperature of a first sensor object at a constant temperature Tcr, second holding means

10

for holding an outer surface temperature of a second sensor object at a constant temperature Tcr, said second sensor object having an emissivity lower than that of said first sensor object, first power consumption value measuring means for measuring a power consumption value H1, required to hold the outer surface temperature of said first sensor object at the constant temperature Tcr, per unit surface area against which an air current strikes, second power consumption value measuring means for measuring a power consumption value H2, required to hold the outer surface temperature of said second sensor object at the constant temperature Tcr, per unit surface area against which no air current strikes, and output means for performing a calculation of H1 - $\alpha \cdot$ H2 by using a predetermined factor $\alpha$ on the basis of the power consumption value H1 measured by said first power consumption value measuring means and the power consumption value H2 measured by said second power consumption value measuring means, and outputting the calculation result as a measurement value H1 - $\alpha \cdot$ H2.

3. A method of calculating an equivalent temperature, characterized by comprising holding means for holding an outer surface temperature of a sensor object at a constant temperature Tcr, a cover mounted on part of an outer surface of said sensor object to shield an air current, power consumption value measuring means for measuring a power consumption value $W_3$ required to hold the outer surface temperature of said sensor object at the constant temperature Tcr, and output means for multiplying the power consumption value $W_3$, measured by said power consumption value measuring means, by [SA/(SA + SB)]$\cdot$(1/a) where a is a surface area, of said sensor object, against which an air current strikes, and SA/SB is a ratio (SA $\overline{:}$ SB) of a surface area, of said sensor object, against which an air current strikes, to a surface area thereof against which no air current strikes, and outputting the product as a measurement value H3,

wherein an equivalent temperature Teq is calculated on the basis of an air temperature Ta, coefficients $b_1$, $b_2$, and $b_4$, and a predetermined factor $\alpha$, according to the following equation (b),

$$Teq = b_1 \cdot Tcr + b_2 \cdot Ta - b_4 \cdot H3 \qquad (b)$$

4. An environment measuring apparatus characterized by comprising holding means for holding an outer surface temperature of a sensor object at a constant temperature Tcr, a cover mounted on part of an outer surface of said sensor object to shield an air current, power consumption value measuring means for measuring a power consumption value $W_3$ required to hold the outer surface temperature of said sensor object at the constant temperature Tcr, and output means for multiplying the power consumption value $W_3$, measured by said power consumption value measuring means, by [SA/(SA + SB)]$\cdot$(1/a) where a is a surface area, of said sensor object, against which an air current strikes, and SA/SB is a ratio (SA $\overline{:}$ SB) of a surface area, of said sensor object, against which an air current strikes, to a surface area thereof against which no air current strikes, and outputting the product as a measurement value H3.

# F I G.1A

# F I G.1B

F I G.2

FIG.3

FIG.4

EP 0 495 117 A1

ACTIVITY AMOUNT (M) $\longrightarrow$ DETERMINATION OF $a_1$, $a_2$, $a_3$, $a_5$, AND $a_6$

CLOTHING THERMAL RESISTANCE ($Ic\ell$) $\longrightarrow$ $\dfrac{a_4}{1+a_5 \cdot Ic\ell}$

CONSTANT TEMPERATURE (Tcr)

AIR TEMPERATURE (Ta)

RADIANT TEMPERATURE (Tr) $\xrightarrow{\quad H \quad}$ Teq $\longrightarrow$

AIR VELOCITY (Vair)

$$a_1 + a_2 \cdot Ta + a_3 \cdot RH \cdot Pa^* - \frac{a_4}{1+a_5 \cdot Ic\ell}\,(a_6 - Teq)$$

AIR TEMPERATURE (Ta) $\longrightarrow$ $a_2 \cdot Ta$ $\longrightarrow$

HUMIDITY (RH) $\longrightarrow$ $a_3 \cdot RH \cdot Pa^*$ $\longrightarrow$

# FIG.5

5-13' (5-23')

5-11' (5-21')

5-12' (5-22')

# FIG.6A

5-13"(5-23")

5-11"(5-21")

5-12"(5-22")

# FIG.6B

# FIG.7A

# FIG.7B

# FIG.7C

# FIG.7D

# FIG.7E

# FIG.7F

F I G.8A

F I G.8B

F I G.8C

# INTERNATIONAL SEARCH REPORT

International Application No PCT/JP91/01015

**I. CLASSIFICATION OF SUBJECT MATTER** (if several classification symbols apply, indicate all) [6]

According to International Patent Classification (IPC) or to both National Classification and IPC

Int. Cl$^5$  F24F11/02

**II. FIELDS SEARCHED**

| Minimum Documentation Searched [7] | |
|---|---|
| Classification System | Classification Symbols |
| IPC | F24F11/00–11/02 |

Documentation Searched other than Minimum Documentation
to the Extent that such Documents are Included in the Fields Searched [8]

| | |
|---|---|
| Jitsuyo Shinan Koho | 1962 – 1991 |
| Kokai Jitsuyo Shinan Koho | 1971 – 1991 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 2-101341 (Yamatake-Honeywell Co., Ltd.), April 13, 1990 (13. 04. 90) | 1-4 |
| A | JP, A, 63-128228 (Daikin Industries, Ltd.), May 31, 1988 (31. 05. 88) | 1-4 |
| A | JP, A, 62-125242 (Daikin Industries, Ltd.), June 6, 1987 (06. 06. 87) | 1-4 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 15, 1991 (15. 10. 91) | October 28, 1991 (28. 10. 91) |
| International Searching Authority | Signature of Authorized Officer |
| Japanese Patent Office | |

Form PCT/ISA/210 (second sheet) (January 1985)